# EUROPÄISCHE PATENTANMELDUNG

(11) **EP 3 904 828 A1**
(43) Veröffentlichungstag der Anmeldung: **03.11.2021**
(21) Anmeldenummer: 21170934.0
(22) Anmeldetag: 28.04.2021
(51) Int. Cl.: G01C 15/00, G01B 11/02, G06K 9/32, G06T 7/73, G06T 17/00

(54) **VERFAHREN ZUM AUSLEGEN EINES BAUELEMENTS UND MESSSYSTEM**

(30) Priorität: 28.04.2020 DE 102020111567
(71) Anmelder: Salamander Industrie-Produkte GmbH, 86842 Türkheim (DE)
(72) Erfinder: Schmiedeknecht, Till, 80992 München (DE)
(74) Vertreter: Schmid, Nils T.F.

(57) **Zusammenfassung**

Bei einem Verfahren zum Auslegen , insbesondere zum Dimensionieren, eines Bauelements (3), wie eines Fensters (31, 31', 31") und/oder einer Tür (32), in einem Bauwerk, wird das Bauelement mit wenigstens zwei Referenzmarkern (5, 7) versehen, ein digitales Bild (9) des Bauelements mit den wenigstens zwei Referenzmarkern (5, 7) erzeugt; und auf Basis des digitalen Bildes (9) werden die Abmessungen, insbesondere ein Aufmaß umfassend Höhe (H, H') und/oder Breite (B, B'), des Bauelements (3) bestimmt.

## Beschreibung

Die Erfindung betrifft ein Verfahren zum Auslegen, insbesondere zum Dimensionieren, eines Bauelements in einem Bauwerk. Die Erfindung betrifft auch ein Messsystem zum Bestimmen von Abmessungen eines Bauelements. Das Verfahren zum Auslegen, insbesondere zum Dimensionieren, oder Messverfahren und das Messsystem können insbesondere eingerichtet sein zum Auslegen, insbesondere zum Dimensionieren von Abmessungen im Wesentlichen flächiger Bauelemente, wie Türen oder Fenster. Als Türen oder Fenster im Sinne dieser Anmeldungen sind im Allgemeinen Türsysteme, Fenstersysteme, Schiebesysteme und/oder Klappladensysteme zu verstehen.

Es sei klar, dass eine Abmessung insbesondere Hinblick auf den äußeren, stationären Rahmen einer Tür oder eines Fensters, vorzugsweise eines Türsystems, eines Fenstersystems, eines Schiebesystems oder eines Klappladenystems bestimmt werden kann. Die zu bestimmende Abmessung kann insbesondere ein sogenanntes Aufmaß sein, wobei das Aufmaß im Allgemeinen das Ausmessen und Aufzeichnen der Dimensionen von Bauelementen eines bestehenden Bauwerk als Grundlage zur Planung oder zur Ermittlung des Umfangs erforderlicher Bauleistungen bezeichnet.

Zur Vorbereitung der Herstellung und Montage von Fenstern in einem Bauwerk, wie einem Neubau oder einem Altbau werden üblicherweise in dem Bauwerk Ist-Abmessungen bestimmt, weil Soll-Abmessungen in Planungsunterlagen oft von den tatsächlichen Ist-Abmessungen abweichen oder nicht hinreichend genau bestimmt sind. Ist-Abmessungen werden in Bauwerken auch in solchen Fällen bestimmt, falls keine Soll-Abmessung dokumentiert oder bekannt sind. Die Erfassung dieser Bauelemente-Abmessungen in Bauwerken ist zeitaufwendig und wird allgemein durch speziell geschultes Fachpersonal durchgeführt, um aus falschen Messungen folgende Fehlproduktionen und Fehlmontage zu vermeiden.

US 2014/0214473 A1 beschreibt ein Verfahren und ein System zum Bereitstellen eines Verkaufs- und Marketingswerkzeugs, bei dem mit einem mobilen Endgerät, wie einem Smartphone, Informationen bezüglich eines Bauwerks und darin vorgesehener Bauelemente erfasst, nachvollzogen und abgerufen werden können.

Gemäß US 2014/0214473 A1 sollen mit dem darin beschriebenen Verfahren und System beispielsweise Messdaten dokumentiert werden und verschiedene Bauwerksverbesserungsoptionen zum Beispiel Bezug auf Fenstererneuerung angezeigt werden. Dazu soll ein Verkaufsmitarbeiter in dem Bauwerk mithilfe des beschriebenen Verfahrens und Systems ein virtuelles Modell des Bauwerk einschließlich der darin vorgesehenen Räume, vorhandene Fenster und dem gewünschten Bauvorhaben dokumentieren. Dabei kann beispielsweise die Anzahl, wie Typ, Größe, und andere Optionen bezogen auf die gewünschten Fenstererneuerung berücksichtigt werden. Das System kann ein Installationsmodul zum Dokumentieren von Messdaten umfassen. Mit dem Installationsmodul soll ein Bild mit einer Referenzvorrichtung aufgenommen werden, um die Dimensionen des vorhandenen Fenster die dementsprechend Dimensionen eines Ersatzfensters, eine Ersatztür oder dergleichen zu bestimmen, wobei als Referenzvorrichtung ein definiertes bzw. mit Teilstrichen versehen Referenzobjekt verwendet werden soll. Allerdings hat sich herausgestellt, dass mit dem in US 2014/0214473 A1 beschriebenen Installationsmodul nicht mit hinreichender Genauigkeit Abmessungen von Bauelementen verlässlich bestimmt werden können.

Es ist eine Aufgabe der Erfindung, die Nachteile des Stands Technik zu überwinden und insbesondere ein alternatives Verfahren und eine Messsystem bereitzustellen mit dem einfach, präzise und verlässlich Abmessungen von Bauelementen, wie Fenstern oder Türen erfasst werden können.

Diese Aufgabe lösen die Gegenstände der unabhängigen Ansprüche. Demnach ist ein Verfahren zum Auslegen, insbesondere zum Dimensionieren, eines Bauelements vorgesehen, wobei das Bauelement mit wenigstens zwei Referenzmarkern versehen wird, und wobei ein digitales Bild des Bauelements mit den wenigstens zwei Referenzmarkern erzeugt wird und wobei insbesondere ausschließlich auf Basis des digitalen Bildes die Abmessungen des Bauelements bestimmt werden. Die Abmessungen des Bauteils können insbesondere ein Aufmaß des Bauelements betreffen, wobei das Aufmaß die Höhe und/oder die Breite des Bauelements umfassen kann. Das Verfahren zum Auslegen, insbesondere zum Dimensionieren, eines Bauteils kann auch als Messverfahren bezeichnet sein. Das Verfahrens kann insbesondere zu Bestimmungen von Abmessungen eines Fensters und/oder einer Tür konfiguriert sein, wobei insbesondere mit Fenster und/oder ein ortsfestes Rahmenteil oder eine Zarge des Fensters und/oder der Tür; oder die Abmessungen eines Türsystems, Fenstersystems, Schiebesystems oder Klappladensystems bezeichnet. In einem Neubau kann vor dem Einbau eines eigentlichen Bauelements, wie eines Fensters oder einer Türe, der wenigstens eine Referenzmarker an einem Bauelement-Provisorium befestigt werden.

Durch die Verwendung von wenigstens zwei insbesondere verschiedenen Referenzmarkern, mit denen das Bauelement an unterschiedlichen Stellen versehen wird, kann auf einfache Weise sichergestellt werden, dass die Abmessungen des Bauelements mit hoher Präzision und Verlässlichkeit bestimmt werden können. Insbesondere erlaubt das Verwenden mehrerer Referenzmarker eine Korrektur von perspektivisch verzerrten digitalen Bildern, etwa wenn Blickrichtung und/oder Blickwinkel einer Bilderfassungsvorrichtung von einem idealen Blickwinkel und/oder einer idealen Blickrichtung abweichen, sie beispielsweise nicht mittig und präzise orthogonal auf das Bauelemente gerichtet ist.

Gemäß einer bevorzugten Ausführung eines Verfahrens zum Auslegen, insbesondere zum Dimensionieren, eines Bauelements wird das Bauelement an charakteristischen Stellen mit Referenzmarkern versehen. Die charakteristischen Stellen können vom charakteristisch für das Bauelemente sein. Die charakteristischen Stellen können charakteristisch bezogen auf die größte Bauelementen-Maße sein. Beispielsweise können die wenigstens zwei Referenzmarker an Rändern eines Bauelementsegments oder des Bauelements vorgesehen werden, die einander in einer ersten Richtung, wie einer waagerechten Horizontalrichtung (Querrichtung) und/oder in einer zweiten Richtung, beispielsweise einer lotrechten Vertikalrichtung oder einer zweiten waagerechten Horizontalrichtung (Längsrichtung) an diametral gegenüberliegen. Es kann bevorzugt sein, dass die charakteristischen Stellen, an denen das Bauelemente mit den wenigstens zwei Referenzmarkern versehen wird, sowohl in einer ersten Richtung als auch in einer zweiten Richtung diametral gegenüberliegende Randstellen eines Bauelementsegments oder eines Bauelements sind.

Das Bauelement kann beispielsweise ein vollständiges Fenstersystem oder Türsystem bezeichnen. Das Bauelementesegment kann beispielsweise das Fensterglas oder den Fensterflügelrahmen oder den Fensterzargenrahmen bezeichnen. Ein mehrgliedriges Tür- oder Fenstersystem kann beispielsweise einen rechten Flügel und einen linken Flügel aufweisen oder einen unbeweglichen (unteren oder oberen) Abschnitt und einen beweglichen (oberen oder unteren) Abschnitt aufweisen. Ein Schiebesystem kann beispielsweise keine, ein oder mehr ortsfeste Schiebesegmente und ein oder mehr bewegliche Schiebesegmente umfassen. Insbesondere um die Außenabmessungen des gesamten Bauelemente, also des Fenstersystems oder Systems oder dergleichen, zu erfassen, können die Referenzmarker an verschiedenen vorzugsweise gleichartigen Bauelementesegmenten vorgesehen sein. Beispielsweise kann bei einem zweiflügeligen Fenster ein erster Referenzmarker an einer ersten Fensterscheibe und der zweite Referenzmarker an einer zweiten Fensterscheibe vorgesehen sein, oder die Referenzmarker können jeweils an einem der mehreren Fensterflügelrahmen vorgesehen werden. Es kann besonders bevorzugt sein, dass bei einem eckigen, insbesondere viereckigen, vorzugsweise rechteckigen, Bauelement die beiden Referenzmarker an insbesondere diametral gegenüberliegenden Ecken des Bauelements vorgesehen werden. Durch das Vorsehen der Referenzmarker insbesondere an diametral gegenüberliegenden Rändern des Bauelementes kann der Messfehler bei der Bestimmung der Abmessungen des Bauelemente minimiert werden, weil die möglichst weit voneinander entfernt an dem Bauelement vorgesehenen Referenzmarker es erlauben, perspektivische Verzerrungen in dem digitalen Bild bei der Bestimmung der Abmessungen zu kompensieren.

Gemäß einer Weiterbildung des erfindungsgemäßen Verfahrens zum Auslegen, insbesondere zum Dimensionieren, eines Bauelements kann die Anordnung der Referenzmarker an charakteristischen Stellen des Bauelementes eine Information über die Form des Bauelementes repräsentieren. Beispielsweise kann eine Anordnung von zwei Referenzmarkern sowohl in einer Horizontalrichtung als auch eine Vertikalrichtung beabstandet voneinander, insbesondere an den Ecken des Bauelements, vorgesehen werden, wenn das Fenster eckig, insbesondere viereckig, vorzugsweise rechteckig, ist. Alternativ können die zwei verschiedenen Referenzmarkern in Horizontalrichtung nebeneinander ohne vertikalen Abstand voneinander bzw. im Wesentlichen ohne Vertikalabstand voneinander, insbesondere mit einem Vertikalabstand voneinander kleiner eines Mindestschwellwerts, beispielsweise mit einem Abstand in Vertikalrichtung von weniger als 30 cm oder weniger als 10 cm voneinander vorgesehen werden, wenn das Bauelement rund, beispielsweise elliptisch, voll- oder halbkreisförmig ist, oder wenn das Bauelement dreieckig insbesondere mit einem langen horizontalen Schenkel ist. Es ist auch denkbar, dass die Referenzmarker in Vertikalrichtung voneinander beabstandet aber im Wesentlichen ohne Horizontalabstand voneinander angeordnet werden, beispielsweise bei einem runden Fenster. Alternativ kann die Anzahl der verwendeten Referenzmarker korrespondierend zu der Form des Bauelements gewählt werden. Beispielsweise könnte für runde Bauelemente zwei Referenzmarker und für eckige Bauelemente eine Anzahl von Referenzmarkern entsprechend der Anzahl der Ecken des Bauelementes vorgesehen werden.

Gemäß einer Ausführung des erfindungsmäßen Verfahrens zum Auslegen, insbesondere zum Dimensionieren, eines Bauelements werden die wenigstens zwei Referenzmarker reversibel an dem Bauelement befestigt. Die reversible Befestigung der beiden Referenzmarker an dem Bauelement kann als reversibles Anbringen der Referenzmarker an dem Bauelement, insbesondere als beschädigungsfreien lösbares Anbringen der Referenzmarker an dem Bauelement bezeichnet werden. Insbesondere können die zwei oder mehr Referenzmarker an dem Bauelement angeklebt, angesteckt, aufgesetzt oder angeklemmt werden. Vorzugsweise können als Referenzmarker Aufkleber insbesondere mit Abzugslasche, die häufig mit dem Markennamen "Post-It" bezeichnet werden, angeklebt werden, wobei es bevorzugt sein kann, dass die Aufkleber auf eine Glasoberfläche oder eine Metalloberfläche des Bauelemente geklebt werden. Alternativ kann es bevorzugt sein, dass der erste der wenigstens zwei Referenzmarker an einem oberen Abschnitt des Bauelementes reversibel befestigt wird und ein zweiter Referenzmarker auf einem Sockel am unteren Endbereich des Bauelementes, beispielsweise einem Fensterbrett bzw. -sims oder einer Türschwelle angeordnet und durch die Schwerkraft dort reversibel befestigt wird. Es ist denkbar, dass genau zwei oder mehr Referenzmarker in Horizontalrichtung nebeneinander durch die Schwerkraft reversibel an einem Fensterbrett bzw. -sims oder einer Türschwelle befestigt, beispielsweise aufgestellt, werden. Durch das Befestigen der Referenzmarker eine Bauelement kann eine hohe Genauigkeit sichergestellt werden, weil sichergestellt ist, dass die Referenzmarker beim Erzeugen des digitalen Bildes des Bauelementes ortsfest an dem Bauelement gehalten werden. Vorzugsweise werden flache Referenzmarker mit einer Dicke von weniger als 10 mm, insbesondere weniger als 5 mm, vorzugsweise weniger als 1 mm verwendet. Derartige dünne Referenzmarker befinden sich nahezu in der selben Ebene in der ersten Richtung, beispielsweise der Horizontalrichtung, und der zweiten Erstreckungsrichtung, beispielsweise Vertikalrichtung, des Bauelements, ohne in erheblichem Maße in der Blickrichtung der Bilderzeugungsvorrichtung, welche das digitale Bild erzeugt, vorzustehen, sodass eine Referenzskala oder mehrere Referenzskalen der Referenzmarker in den Erstreckungsrichtungen des Bauelemente ohne Messfehler übertragen werden können.

Gemäß einer bevorzugten Ausführung eines erfindungsgemäßen Verfahrens zum Auslegen eines Bauelements, werden sich voneinander unterscheiden der Referenzmarker verwendet. Beispielsweise kann ein erster Referenzmarker mit einer ersten Markierung, beispielsweise einem Buchstaben "L", einer Nummerierung, beispielsweise "1", und/oder einem ersten Piktogramm verwendet werden. Der zweite Referenzmarker kann eine zweite Markierung, beispielsweise einen zweiten Buchstaben, wie "R", eine zweite Zahl, wie "2", und/oder ein zweites Piktogramm verwenden. Die unterschiedlichen Referenzmarker können verschiedene Farben oder Farbkombinationen haben. Unterschiedliche Piktogramme können beispielsweise unterschiedliche geometrische Formen, oder verschiedene Abschnitte eines Logos oder einer Marke insbesondere des Bauelementenherstellers oder Bauelementenvertriebs sein. Beispielsweise können unterschiedliche Referenzmarker als verschiedene Markierungen einen Vorderteil respektive ein Hinterteil eines stilisierten Tieres verwendet werden. Unterschiedliche Referenzmarker mit verschiedenen Markierungen können beispielsweise eine unterschiedliche Anzahl von gleichartigen Markierungen, insbesondere Zeichen, wie Striche oder insbesondere gleichartigen geometrische Form, wie Kreise, Dreiecke, Vierecke, usw., aufweisen.

Beim Verfahren zum Auslegen eines Bauelements können Referenzmarker mit einer maschinenlesbaren optischen Markierung verwendet werden, beispielsweise QR-Code, Strichcode oder dergleichen. Eine maschinenlesbare Markierung kann im visuellen Lichtspektrum sichtbar oder nicht sichtbar sein. Eine optische, maschinenlesbare Markierung kann insbesondere ausschließlich im Infrarotspektrum und/oder im ultravioletten Lichtspektrum erkennbar sein. Es ist denkbar, dass unterschiedliche Referenzmarker im sichtbaren Lichtspektrum identisch erscheinen und sich nur in ihrem Erscheinungsbild im infraroten oder ultravioletten Spektrum unterscheiden.

Bei einer Ausführung eines erfindungsgemäßen Verfahrens zum Auslegen eines Bauelements wird die zu dem digitalen Bild des Bauelements korrespondierende Form des Bauelements erfasst und die Abmessungen werden auf Basis der erfassten Form bestimmt. Beispielsweise kann mithilfe einer Bildverarbeitungsroutine des digitalen Bildes die Form des Bauelementes automatisch erfasst werden. Alternativ oder zusätzlich kann die Erfassung der Form des Bauelementes erfolgen mithilfe von Informationen, die maschinenlesbar durch wenigstens eine der Referenzmarkierungen wiedergegeben werden. Alternativ oder zusätzlich kann die Form des Bauelements erfasst werden mithilfe von Eingabedaten unter Verwendung einer grafischen Benutzerschnittstelle. Indem bei dem Verfahren zum Auslegen, insbesondere zum Dimensionieren, des Bauelementes die konkrete Form des Bauelementes, welche zu dem digitalen Bild des Bauelements korrespondiert, erfasst wird, kann das Verfahren auf verschiedene Bauelementeformen eines jeweiligen Anwendungsfalls individuell angepasst werden. Auf diese Weise kann das Verfahren für unterschiedlichste Bauelemente verwendet werden.

Gemäß einer Weiterbildung des Verfahrens zum Auslegen eines Bauelements wird die Form des Bauelementes unter Verwendung einer grafischen Benutzerschnittstelle erfasst, wobei die grafische Benutzerschnittstelle das digitale Bild darstellt und eine auf die Form des Bauelements bezogene Benutzereingabe registriert. Als grafische Benutzerschnittstelle kann beispielsweise ein Touchdisplay eines mobilen Endgeräts, wie ein Tablet-PC oder ein Smartphone, verwendet werden. Als grafische Benutzerschnittstelle kann alternativ oder zusätzlich ein Desktop-PC oder dergleichen mit einem reinen Ausgabedisplay und einem oder mehreren Eingabeeinheiten, wie einer Tastatur und/oder einer Maus verwendet, werden. Die grafische Benutzerschnittstelle kann eine zu der Form des Bauelements korrespondierende Referenzgeometrie darstellen, beispielsweise ein Viereck, insbesondere ein Rechteck. Die Referenzgeometrie kann von der grafischen Benutzerschnittstelle dargestellt werden, wobei die dargestellte Referenzgeometrie rahmenartig, insbesondere als geschlossener Rahmen oder als Rahmenabschnitte, wie Rahmeneckabschnitte oder Rahmen-Flankenabschnitte, dargestellt wird. Die auf die Form des Bauelements bezogene Benutzereingabe kann einen Abgleich der in dem digitalen Bild dargestellten Form des Bauelementes und der zu der Form des Bauelements korrespondierenden Referenzgeometrie bewirken. Zum Abgleich von dargestellter Bauelementeform und Referenzgeometrie kann beispielsweise vorgesehen sein, dass ein mobiles Endgerät (insbesondere eines mit Schwerkraftsensor und/oder Bewegung- und/oder Beschleunigungssensor und/oder Position- und/oder Lagesensor) in einer Horizontalrichtung oder einer Vertikalrichtung bewegt wird, um eine horizontale oder eine vertikale Achse gekippt wird, oder um eine zu Blickrichtung der Bilderfassungsvorrichtung korrespondierende insbesondere horizontale Achse gedreht wird, wobei eine zu der Bewegung des Endgeräts korrespondierende Relativbewegung von Bauelement und Referenzgeometrie erfasst wird. Der Abgleich von Referenzgeometrie und dargestellter Bauelementenform kann beispielsweise durch Verwendung von Knöpfen oder Schiebereglern der Benutzerschnittstelle erfolgen. Es kann bevorzugt sein, dass die Referenzgeometrie insbesondere zu Beginn des Abgleichs entsprechend der Position und/oder Lage der Referenzmarker in dem digitalen Bild angeordnet ist. Das Abgleichen einer Referenzgeometrie mit einer in einem digitalen Bild des Bauelementes dargestellten Form des Bauelementes kann umfassen, dass ein Teilbereich oder mehrere Teilbereiche des digitalen Bildes vergrößert dargestellt werden.

Bei einer Ausführung des Verfahrens nach einem der vorstehenden Ansprüche wird ferner eine zu dem digitalen Bild des Bauelements korrespondierende Perspektivinformation erfasst und die Abmessungen werden auf Basis der Perspektivinformation bestimmt. Die wenigstens eine Perspektivinformation kann beispielsweise mittels wenigstens einem Lagesensor der Bilderzeugungsvorrichtung erzeugt werden. Die Perspektivinformation kann beispielsweise umfassend eine Neigung gegenüber einer Horizontalen oder einen Winkel gegenüber einer Vertikalen umfassen. Die Perspektivinformation kann wenigstens eine auf die Bilderzeugungsvorrichtung, beispielsweise deren Optikkomponente und/oder Bilderzeugungs-Sensorikkomponente, wie ein CCD-Sensor, bezogene Information hinsichtlich vorrichtungs- oder komponentenspezifischer vorbestimmter Bildverzerrung sein. Mithilfe der wenigstens einen Perspektivinformation kann eine besonders präzise Auslegung, insbesondere Dimensionierung, erfolgen.

Gemäß einer Ausführung wird wenigstens ein weiteres auf dem digitalen Bild abgebildetes Bauelement, wie wenigstens ein Fenster oder wenigstens eine Tür, erkannt, und auf Basis des digitalen Bildes die Abmessungen, insbesondere ein Aufmaß umfassend Höhe und/oder Breite, des wenigstens einen weiteren Bauelements bestimmt werden. Beispielsweise können mehrere Bauelemente, wie Fenster und Türen, an einer Gebäudefassade erkannt werden. Die Erkennung des wenigstens einen weiteren abgebildeten Bauelements, also beispielsweise eines anderen Fensters, einer anderen Tür, das oder die nicht mit den Referenzmarken versehen ist, kann beispielsweise mithilfe von Benutzereingaben an einer grafischen Benutzeroberfläche erfolgen. Alternativ oder zusätzlich kann das wenigstens eine weitere abgebildete Bauelement mithilfe einer computerimplementierten Mustererkennungsroutine erkannt werden, vorzugsweise anhand einer Form und/oder anhand von Lichtwerten, insbesondere Farbwerten und/oder Helligkeitswerten. Vorzugsweise kann das wenigstens eine weitere Bauelement erkannt werden mithilfe einer Mustererkennungsroutine bezogen auf Lichtwerte im infraroten Spektrum. Indem mehrere auf dem digitalen Bild abgebildete Bauelemente erkannt werden, können mit geringerem Aufwand die Abmessungen mehrerer Bauelemente an einer Gebäudeseite, beispielsweise einer Fassade, bestimmt werden.

Gemäß einer Ausführung eines erfindungsgemäßen Verfahrens zum Auslegen eines Bauelements wird auf Basis der bestimmten Abmessungen des Bauelementes und bauelementespezifischer Kennwerte ein Montageaufwand kalkuliert. Die bauelementespezifischen Kennwerte können voreingestellt sein. Die bauelementespezifischen Kennwerte können durch eine Benutzereingabe unter Verwendung einer insbesondere grafischen Benutzerschnittstelle, wie einem Touch-Display eines mobilen Endgeräts, bestimmt werden.

Das Verfahren kann das Empfangen bauelementespezifischer Kennwert von einer Datenbank umfassen. Insbesondere kann das Verfahren bauelementespezifischer Kennwerte bezogen auf verschiedene Typen (Fenstersystem, Türsystem, oder Schiebesystem, etc.), verschiedene Bauarten (unterschiedliche Verglasungsarten, Rahmenarten, unterschiedliche Isoliereigenschaften, unterschiedliche Bauweise, beispielsweise Holz-, Kunststoff-, Recyclingkunststoff-, Metall- oder Komposit-Bauweise) und/oder verschiedene Bauelementeausgestaltungen (beispielsweise Farbgestaltung, Art der Beschläge, dekorative Elemente, Türblatt-Gestaltungsoptionen oder dergleichen) von einer Datenbank empfangen. Es sei klar, dass eine Datenbank Teil eines Messsystems, insbesondere lokal in einem mobilen Endgerät gespeichert, sein kann, um von dem Verfahren lokal abgerufen zu werden. Alternativ oder zusätzlich kann das Verfahren dazu ausgestaltet sein, Informationen von einer Datenbank mittels Kommunikationsmitteln, wie einer Internetübertragung, einer Netzwerk-Übertragung und/oder einer Übertragung von einem externen Datenträger auf ein insbesondere mobiles Endgerät, zu erfassen. Die Kalkulation des Montageaufwands kann unter Berücksichtigung von bauelementespezifischen Kennwerten hinsichtlich eines Materialpreisen, Herstellungspreisen, Transportpreisen, Montagepreisen, Demontagepreisen und/oder Entsorgungspreisen, etc. umfassen. Das Verfahren kann dazu ausgestaltet sein, den Montageaufwand für unterschiedliche Arten, Typen und/oder Ausgestaltungen von Bauelementen zu kalkulieren, wobei insbesondere das Kalkulieren des Montageaufwands die Ausgabe eines Montageaufwands oder mehrerer kalkulierter Montageaufwände umfassen kann. Die Kalkulation des Montageaufwand es kann umfassen, dass eine Lieferzeit, Herstellungszeit, Transportzeit oder dergleichen berücksichtigt wird. Die Montageaufwand kann die Verfügbarkeit von Materialien, Herstellungsressourcen, Herstellungsvorrichtungen und Herstellungspersonal, Montageressourcen, wie Montagepersonal und Montagewerkzeug, und/oder die Verfügbarkeit von Transportmitteln umfassen.

Das erfindungsgemäße Messsystem kann insbesondere zur Durchführung des erfindungsgemäßen Verfahrens konfiguriert sein. Das erfindungsgemäße Verfahren kann insbesondere dazu ausgestaltet sein mit dem erfindungsgemäßen Messsystem durchgeführt zu werden. Ein erfindungsgemäße Verfahren kann insbesondere gemäß der Funktionalität des erfindungsgemäßen Messsystems durchgeführt werden.

Die Erfindung betrifft auch ein Messsystem umfassend eine Bilderzeugungsvorrichtung zum Erzeugen eines digitalen Bildes von einem Bauelement, insbesondere einem Fenster und/oder einer Tür, in einem Bauwerk. Das Messsystem umfasst ferner wenigstens zwei an unterschiedlichen Stellen des Bauelements anbringbare Referenzmarker. Ferner umfasst das Messsystem eine Bildverarbeitungsvorrichtung zum Bestimmen von Abmessungen des Bauteils auf Basis eines durch die Bilderzeugungsvorrichtung von dem Bauelement und wenigstens einem der Referenzmarker, insbesondere beiden Referenzmarkern, erzeugten digitalen Bildes.

Als Bilderzeugungsvorrichtung zum Erzeugen des digitalen Bildes kann insbesondere eine Digitalkamera, wie eine Digitalkamera eines mobilen Endgeräts, beispielsweise eines Smartphones oder ein Tablet-PC, vorgesehen sein. Eine Referenzmarker kann ein insbesondere grafischer Referenzmarker sein. Vorzugsweise umfasst ein Referenzmarker wenigstens eine Skala für eine erste Längenabmessungen, wie eine Längenabmessungen einer ersten insbesondere vertikalen Richtung. Insbesondere kann ein Referenzmarker eine zweite Skala vorzugsweise für eine Längenmessung einer zweiten insbesondere horizontalen Richtung umfassen. Die erste und gegebenenfalls zweite Skala können als ein grafisches Objekt, wie ein Rechteck, insbesondere ein Quadrat, Dreieck, Kreuz oder dergleichen ausgestaltet sein.

Das Messsystem kann insbesondere zwei verschiedene Referenzmarker umfassen, wobei die erste und/oder zweite Skala des ersten Referenzmarkers und des dazu verschiedenen zweiten Referenzmarkers vorzugsweise gleich sind. Insbesondere können sich die Referenzmarker in einem oder mehreren anderen Aspekt(en) als der ersten und/oder zweiten Skala unterscheiden. Beispielsweise kann der erste Referenzmarker eine erste optisch erfassbare Markierung und der zweite Referenzmarker eine von der ersten Markierung unterschiedliche zweite Markierung aufweisen. Die Unterschiede zwischen dem ersten Referenzmarker und dem zweiten Referenzmarker können insbesondere im sichtbaren optischen Spektren (380-780 nm) liegen. Unterschiede der Referenzmarker können insbesondere ausschließlich im UV-Spektrum (Wellenlängen kleiner als 380 nm) und/oder im Infrarotspektrum (Wellenlängen größer als 780 nm) sichtbar sein.

Eine Bildbearbeitungsvorrichtung kann insbesondere eine computerimplementierte Vorrichtung zur Durchführung bekannter Bildverarbeitungsverfahren sein. Die Bildverarbeitungsvorrichtung beispielsweise wenigstens eine zentrale Recheneinheit (CPU) und/oder wenigstens eine grafische Recheneinheit (GPU) umfassen. Die Bildverarbeitungsvorrichtung kann beispielsweise zur Durchführung der Bilderkennungssoftware openCV oder dergleichen eingerichtet sein. Die Bildverarbeitungsvorrichtung kann insbesondere zur Durchführung des in CN 108072327 A1 beschriebenen Verfahrens eingerichtet sein.

Insbesondere kann die Bildverarbeitungsvorrichtung dazu eingerichtet sein, wenigstens eine Skala wenigstens eines Referenzmarkers als Referenzgröße zu erfassen und anhand der Referenzgröße eine Abmessung des Bauelementes, insbesondere in einer Richtung entsprechend der Ausrichtung der verwendeten Skala, zu bestimmen. Die Bildbearbeitungsvorrichtung kann dazu ausgestaltet sein, wenigstens eine zweite Skala des wenigstens einen ersten Referenzmarkers zu erfassen um eine Referenzgröße zur Bestimmung der Abmessungen des Bauelementes einer zweiten Richtung entsprechend der Ausrichtung zweiten Skala zu erfassen. Ferner kann die Bildverarbeitungsvorrichtung dazu eingerichtet sein, anhand des zweiten Referenzmarkers und dessen erster und/oder zweiten Skala entsprechende Bestimmungen durchzuführen.

Ferner kann die Bildverarbeitungsvorrichtung dazu eingerichtet sein, einen Abgleich der mithilfe der wenigstens einen Skala des ersten Referenzmarkers erfassten Abmessungen und der mithilfe der wenigstens einen Skala des zweiten Referenzmarkers erfassten Abmessungen vorzunehmen. Beispielsweise kann die Bildverarbeitungsvorrichtung dazu eingerichtet sein, die eine Abmessungen des Bauelementes zu bestimmen anhand eines insbesondere arithmetischen Mittelwerts der auf Basis des ersten Referenzmarkers und der auf Basis des zweiten Referenzmarkers erfassten Abmessungen.

Gemäß einer Ausführung eines erfindungsgemäßen Messsystem mit wenigstens zwei oder genau zwei Referenzmarkern ist die Bildverarbeitungsvorrichtung dazu eingerichtet, Abmessungen des Bauelementes auf Basis eines durch die Bilderzeugungsvorrichtung von dem Bauelement und den genau oder wenigstens zwei Referenzmarkern, die an charakteristischen Stellen des Bauelementes angeordnet sind, zu erzeugen. Insbesondere kann die Bildverarbeitungsvorrichtung dazu eingerichtet sein, anhand der relativen Position des ersten Referenzmarkers und des zweiten Referenzmarkers, zu ermitteln, an welchen charakteristischen Stellen des Bauelementes der die Referenzmarker angeordnet sind. Die Bildverarbeitungsvorrichtung kann dazu beispielsweise die Positionen der Referenzmarker in einem insbesondere hochformatigen oder querformatigen digitalen Bild berücksichtigen. Alternativ oder zusätzlich kann die Bildverarbeitungsvorrichtung die Positionen der Referenzmarker bezogen auf eine lotrechte Richtung zu erfassen, welche beispielsweise mithilfe eines Schwerkraftsensor der Bildverarbeitungsvorrichtung vorgegeben sein kann.

Die Bildverarbeitungsvorrichtung kann dazu eingerichtet sein, die insbesondere vorbestimmten charakteristischen Stellen des Bauelements mit den unterschiedlichen grafischen Markierungen des ersten Referenzmarker und des zweiten Referenzmarkers zu korrelieren. Beispielsweise kann ein erster Referenzmarker eine grafische Markierung aufweisen, welche von der Bildverarbeitungsvorrichtung dahingehend interpretiert wird, dass der erste Referenzmarker an einer ersten vorbestimmten charakteristischen Stelle, beispielsweise an einer oberen, linken Ecke des Bauelementes, angeordnet ist. Die Bildbearbeitungsvorrichtung kann dazu eingerichtet sein, zu erfassen, dass der zweite Referenzmarker eine zweite grafische Markierung aufweist, welche von der Bildverarbeitungszustand eingehend interpretiert wird, dass der zweite Referenzmarker an einer zweiten vorbestimmten charakteristischen Stelle, beispielsweise in einer unteren, rechten Ecke, des Bauelementes angeordnet ist.

Gemäß einer Ausführung des erfindungsgemäßen Messsystems, welche mit den vorherigen kombinierbar ist, umfasst das Messsystem ferner ein Formerfassungsmittel, wie eine grafische Benutzerschnittstelle, insbesondere ein Touch-Display, das dazu eingerichtet ist, unter Berücksichtigung des digitalen Bildes eine Form des Bauelementes zu erfassen, wobei die Bildverarbeitungsvorrichtung dazu eingerichtet ist, die Bestimmung der Abmessungen des Bauelementes auf Basis der erfassten Form durchzuführen. Alternativ oder zusätzlich kann das Formerfassungsmittel als Teil der Bildverarbeitungsvorrichtung ausgestaltet sein, wobei beispielsweise anhand von Rasterbildung oder Kantenerkennung die Form des Bauelementes erfasst werden kann.

Gemäß einer Ausführung des erfindungsgemäßen Messsystems, welche mit den vorherigen kombinierbar ist, umfasst das Messsystem ein mobiles Endgerät, wie ein Smartphone oder ein Tablet-PC, wobei das mobile Endgerät die Bilderzeugungsvorrichtung sowie gegebenenfalls die Bildverarbeitungsvorrichtung, das Formerfassungsmittel, die grafische Benutzerschnittstelle, wenigstens eine Kommunikationsschnittstelle und/oder eine Datenbank umfasst.

Bei einer Weiterbildung des Messystems weist das mobile Endgerät wenigstens einen Sensor, wie einen Lagesensor, auf und ist dazu ausgelegt und eingerichtet, eine zu dem digitalen Bild korrespondierende Perspektivinformation, beispielsweise eine Neigung des mobilen Endgeräts, zu erfassen. Ferner ist die Bildverarbeitungsvorrichtung dazu eingerichtet ist, die Bestimmung der Abmessungen des Bauelements auf Basis der erfassten Perspektivinformation durchzuführen.

Bei einer weiteren Ausführung des Messsystems ist die Bildverarbeitungsvorrichtung ferner zum Bestimmen von Abmessungen wenigstens eines weiteren in dem digitalen Bild dargestellten Bauelements auf Basis eines einzelnen durch die Bilderzeugungsvorrichtung von dem Bauelement, dem wenigstens einem Referenzmarker und dem wenigstens einen weiteren Bauelementes erzeugten digitalen Bildes ausgelegt und eingerichtet.

Weitere Aspekte der Erfindung sind in den Unteransprüchen angegeben. Weitere Vorteile, Merkmale und Aspekte der Erfindung sind durch die folgende Beschreibung einer bevorzugten Ausführung der Erfindung anhand der beiliegenden Zeichnungen erläutert, in denen zeigen:
- Figur 1: eine Ausführung eines erfindungsgemäßen Messsystems;
- Figur 2a: ein erster Referenzmarker;
- Figur 2b: ein zweiter Referenzmarker;
- Figur 3a: eine Tür mit zwei Referenzmarkern;
- Figur 3b: eine Rundfenster mit zwei Referenzmarkern;
- Figur 3c: ein dreieckiges Fenster mit zwei Referenzmarkern;
- Figur 4a: ein digitales Bild des Bauelementes mit Referenzmarkern;
- Figur 4b: das digitale Bild gemäß Figur 4a mit einer darin dargestellten Referenzgeometrie;
- Figur 4c: das digitale Bild gemäß Figur 4a mit Abmessungen; und
- Figur 5: in Ablaufdiagramm einer Ausführung eines erfindungsgemäßen Verfahrens.

In den folgenden Darstellung bevorzugter Ausführungen der Erfindung werden dieselben oder ähnliche Bezugszeichen für dieselben oder ähnliche Komponenten verwendet, um die Lesbarkeit der Beschreibung zu vereinfachen.

Ein erfindungsgemäßes Messsystem ist im Allgemeinen mit Bezugszeichen 1 bezeichnet. Die wesentlichen Komponenten des Messsystems 1 sind eine Bilderzeugungsvorrichtung 101 zum Erzeugen eines digitalen Bildes 9 von einem Bauelement 3, insbesondere einem Fenster 31 oder einer Tür 32, innerhalb eines bestehenden Bauwerk, wenigstens ein erster Referenzmarker 5 und wenigstens ein zweiter, von dem ersten Referenzmarker 5 unterschiedlicher Referenzmarker 7, sowie eine Bildverarbeitungsvorrichtung 103 zum Bestimmen von Abmessungen des Bauelements 3 auf Basis eines durch die Bilderzeugungsvorrichtung 101 von dem Bauelement 3 und den Referenzmarker 5, 7 erzeugten digitalen Bildes 9.

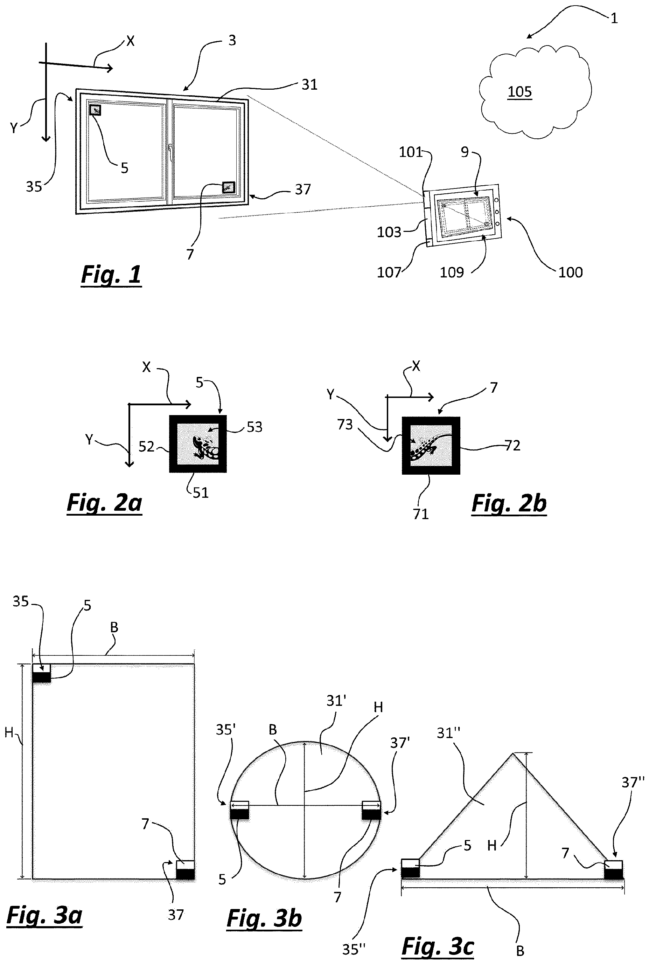

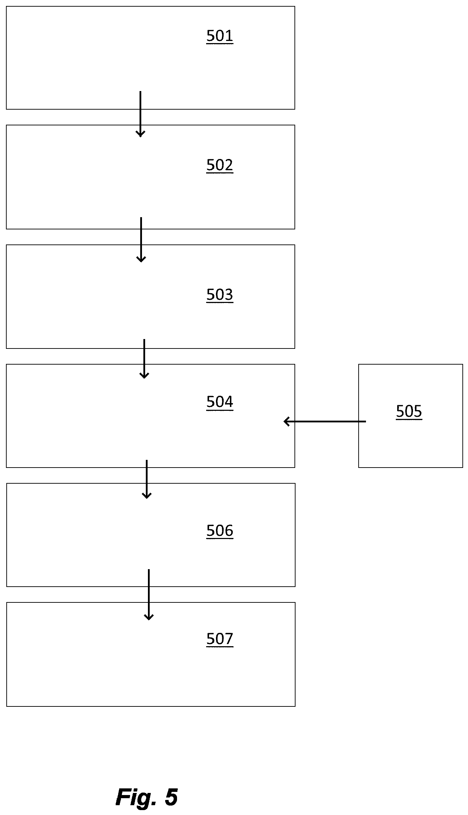

Figur 1 zeigt eine Ausführung eines erfindungsgemäßen Messsystems 1, bei dem ein mobiles Endgerät 100, wie ein Tablet-PC oder ein Smartphone, dazu eingerichtet ist, das weiter unten in Fig. 5 beschriebene Verfahren zum Auslegen eines Bauelements 3 durchzuführen. Das mobile Endgerät 100 umfasst eine Bilderzeugungsvorrichtung 101 zum Erzeugen digitaler Bilder von einem Bauelement 3 mit daran angebrachten, unterschiedlichen Referenzmarkern 5 und 7 zu erzeugen.

Das mobile Endgerät 100 in der in Figur 1 dargestellten Ausführung umfasst eine Bildverarbeitungsvorrichtung 103. Es sei klar, dass die Bildverarbeitungsvorrichtung 103 auf einer anderen Hardware realisiert sein kann, als der Hardware, die die Bilderzeugungsvorrichtung 101 umfasst. Beispielsweise kann als Bildverarbeitungsvorrichtung 103 ein Webserver (nicht näher dargestellt) vorgesehen sein. Die Bilderzeugungsvorrichtung 101 kann mit der Bildverarbeitungsvorrichtung 103 direkt oder indirekt Daten austauschen, beispielsweise über ein kabelgebundenes Datenübertragungssystem und/oder über ein kabelloses Datenübertragungssystem, wie WLAN.

Das mobile Endgerät 100 kann mit einer Datenbank 105 oder mehreren Datenbanken ausgestattet oder verbunden sein. Beispielsweise kann das mobilen Endgerät mit einem Speichermedium ausgestattet sein, auf dem einer Datenbank hinterlegt ist. Alternativ oder zusätzlich kann das mobile Endgerät 109 dazu eingerichtet sein, signalübertragungsgemäß mit einer Datenbank, beispielsweise einer Cloudspeicher-Datenbank, zu kommunizieren. Die Datenbank 105 kann insbesondere dazu eingerichtet sein, bauelementespezifische Kennwerte zur Kalkulation eines Montageaufwands vorzuhalten.

Es Messsystem 1 umfasst 2 unterschiedliche Referenzmarker 5 und 7. Der erste Referenzmarker 5 des Messsystems 1 ist an einer ersten charakteristischen Stelle 35 am oberen, linken Ecke auf der Scheibe eines Fensters 31 befestigt. Der zweite Referenzmarker 7 des Messsystems 1 ist in einer zweiten charakteristischen Stelle 37 auf dem Fensterglas an der unteren, rechten Ecke des Fensters 31 angeordnet. Es sei klar, dass anstelle eines Fensters 31 das Messsystem 1 dazu eingerichtet sein kann, mit einem Bauelement 3, zum Beispiel einem Türsystem, einem Fenstersysteme, einem Schiebesystem oder dergleichen zusammen zu wirken.

Die Bilderfassungsvorrichtung 101 erzeugt ein digitales Bild 9 von einem Fenster 31 und dem darauf angebrachten ersten Referenzmarker 5 sowie dem darauf angebrachten zweiten Referenzmarker 7. Das digitale Bild 9 kann auf einer grafischen Oberfläche 109, wie dem Touch-Display dem des mobilen Endgeräts 100, dargestellt werden.

Das mobile Endgerät 100 umfasst ferner einen Schwerkraftsensor 107, um eine lotrechte Richtung Y zu identifizieren. Die Bildbearbeitungsvorrichtung 103 kann auf Basis der von dem Schwerkraftsensor 107 identifizierten lotrechten Richtung Y eine insbesondere zur lotrechten Y quer orientierte, insbesondere orthogonale, waagerechte horizontale Richtung X identifiziert. Die lotrechte Richtung Y kann im Allgemeinen als zweite Richtung beschrieben sein. Die waagerechte Richtung X kann Allgemeinen als erste Richtung bezeichnet sein.

Figur 2a zeigt einen ersten Referenzmarker 5 und Figur 2b einen zweiten Referenzmarker 7, die sich voneinander unterscheiden. Die Referenzmarker für 5 und 7 weisen unterschiedliche optische, maschinenlesbare Markierungen 53 bzw. 73 auf. Damit die erste Markierung 53 des ersten Referenzmarkers 5 und die zweite Markierung 73 des zweiten Referenzmarkers durch menschliche Benutzer einfach unterscheidbar sind, sind die Markierungen 53 und 73 offensichtlich unterschiedlich voneinander.

In dem in den Figuren 2a und 2b dargestellten Beispiel ist die Markierung 53 des ersten Referenzmarkers 5 als Piktogramm des Vorderteils und die Markierung 73 des zweiten Referenzmarkers 7 als Piktogramm des Hinterteils eines stilisierten Salamanders abgebildet. Die Markierungen 53, 73 des ersten und des zweiten Referenzmarkers 5, 7 ist nach Art eines schwarz-weißen QR-Codes realisiert, sodass die Bildverarbeitungsvorrichtung 103 den ersten Referenzmarker 5 von dem zweiten Referenzmarker unterscheiden kann.

Es ist denkbar, dass ein Referenzmarker 5 oder 7 unterschiedliche Markierungen einerseits zu Unterscheidung durch menschliche Nutzer und andererseits zur Unterscheidung durch eine Bildverarbeitungselektronik umfasst. Beispielsweise kann Referenzmarker eine erste, für das menschliche Auge im visuellen Spektrum leicht unterscheidbar Markierung aufweisen und eine davon unterschiedliche zweite Markierung zur maschinellen Identifikation des ersten oder zweiten Referenzmarkers, die insbesondere ausschließlich im Infrarotspektrum oder im Ultraviolettspektrum erkennbar sein kann.

Die Referenzmarker 5, 7 in dem hier abgebildeten Beispiel umfassen je eine erste Skala 51 bzw. 71 als Größenreferenz an einer ersten Richtung X, welche Vorzugweise mit einer waagerechten korrespondieren kann, sowie eine zweite Skala 52 bzw. 72 als Größenreferenz in einer zweiten Richtung Y, insbesondere der lotrechten Richtung. Bei dem hier abgebildeten Beispiel sind die erste Skala 51/71 und die zweite Skala 52/72 gleich groß. Die erste Skala 51 bzw. 71 und die zweite Skala 52 bzw. 72 des ersten bzw. zweiten Referenzmarkers 5, 7 sind als gegenüber einem hellen, insbesondere weißen, Referenzmarker-Hintergrund kontrastierende dunkle, insbesondere schwarze, Rahmenbalken gebildet.

Die Figuren 3a, 3b und 3c zeigen Beispiele unterschiedliche Bauelementee mit daran vorgesehenen Referenzmarkern. Die Referenzmarker 5, 7 können beispielsweise als Aufkleber, ähnlich einem Post-It® durch einen Benutzer an ein Bauelemente, insbesondere an charakteristischen Stellen des Bauelements, festgeklebt werden.

Figur 3a zeigt als exemplarisches Bauelement eine stilisierte Tür 32, deren Höhe H und Breite B ermittelt werden sollen. Zu diesem Zweck ist der erste Referenzmarker 5 an einer ersten charakteristischen Stelle 35 im oberen, linken Winkel der Türe 32 angeordnet. Der zweite Referenzmarker 7 ist an einer zweiten charakteristischen Stelle 37 am unteren, rechten Winkel der Türe 32 angeordnet.

Sowohl der ersten Richtung X als auch in der zweiten Richtung Y sind die Referenzmarker 5 und 7 in einem Abstand voneinander angeordnet. Die Bildverarbeitungsvorrichtung 103 kann dazu ausgelegt sein, die erste Richtung X und/oder die zweite Richtung Y anhand der Ausrichtung einer Skala oder unterschiedlichen Skalen wenigstens eines Referenzmarkers zu bestimmen. Es denkbar, dass die Bildverarbeitungsvorrichtung 103 dazu eingerichtet ist, eine Orientierung des Bauelements 3, eine Referenzgeometrie 8* des Bauelements 3 oder dergleichen anhand der Ausrichtung des ersten Referenzmarkers 5 und des zweiten Referenzmarkers 7 zu relativ zueinander zu identifizieren.

Figur 3b zeigt ein Bauelement 3 in Form eines elliptischen Fensters 31' mit einer Höhe H und einer Breite B. Die Referenzmarker 5 und 7 sind an in der waagerechten ersten Richtung X gegenüberliegenden Seitenrändern angeordnet. Der linke Randstelle ist eine erste charakteristische Stelle 35', an der der erste Referenzmarker 5 angeordnet ist. Die gegenüberliegende, rechte Randstelle bildet die zweite charakteristische Stelle 37' des runden Fensters 31', wo der zweite Referenzmarker 7 angeordnet ist. Die Bildverarbeitungsvorrichtung 103 kann dazu ausgelegt sein, anhand dessen, dass der erste Referenzmarker 5 und der zweite Referenzmarker 7 in der Vertikalrichtung Y im Wesentlichen auf derselben vertikalen Höhe Y angeordnet sind, zu schließen, dass es sich bei dem Fenster 31' um eine Rundfenster handelt und eine entsprechende Referenzgeometrie in der Benutzeroberfläche 109 anzeigen

Die Bildverarbeitungsvorrichtung 103 kann beispielsweis eine kreisförmige Referenzgeometrie in der grafischen Benutzeroberfläche 109 vorschlagen (nicht näher dargestellt), wobei der Benutzer mithilfe der Benutzeroberfläche 109 die Querbreite in der insbesondere waagerechten ersten Richtung X und die Höhe in der zweiten insbesondere vertikalen Richtung Y durch eine Benutzereingabe, wie das Verschieben eines Schieberegler, eine Bewegung des mobilen Endgeräts oder dergleichen einstellen kann. Alternativ oder zusätzlich die Bilderfassungselektronik 103 kann eine Benutzereingabe registrieren, die der Vorrichtung ein Hinweis auf die eine gewünschte Referenzgeometrie gibt, beispielsweise elliptisch, kreisförmig, rechteckig, quadratisch, dreieckig, oder dergleichen, und das Messsystem kann die Abmessungen mithilfe der gewünschten Referenzgeometrie bestimmen.

Figur 3c zweit ein dreieckiges Fenster 31", bei dem der erste Referenzmarker 5 an einer charakteristischen Stellen in Form am unteren linken Eckpunkt des 35" angeordnet ist. Der zweite Referenzmarker 7 ist an einer charakteristischen Stelle 37" des Fensters 31" an dessen unterer rechter Ecke angeordnet. Die Bildverarbeitungsvorrichtung 103 kann dazu ausgelegt sein, auf Basis des Umstands, dass der erste Referenzmarker 5 und der zweite Referenzmarker 7 in der Vertikalrichtung Y im Wesentlichen auf derselben vertikalen Höhe Y angeordnet sind, zu schließen, dass es sich bei dem Fenster 31" um eine Dreiecksfenster handelt und eine entsprechende Referenzgeometrie in der Benutzeroberfläche 109 anzeigen.

Das Bauelement 3 kann eine spezielle Formen aufweisen (nicht abgebildet), beispielsweise halbrund, dreieckig oder rechteckig mit Bögen am oberen Ende sein.

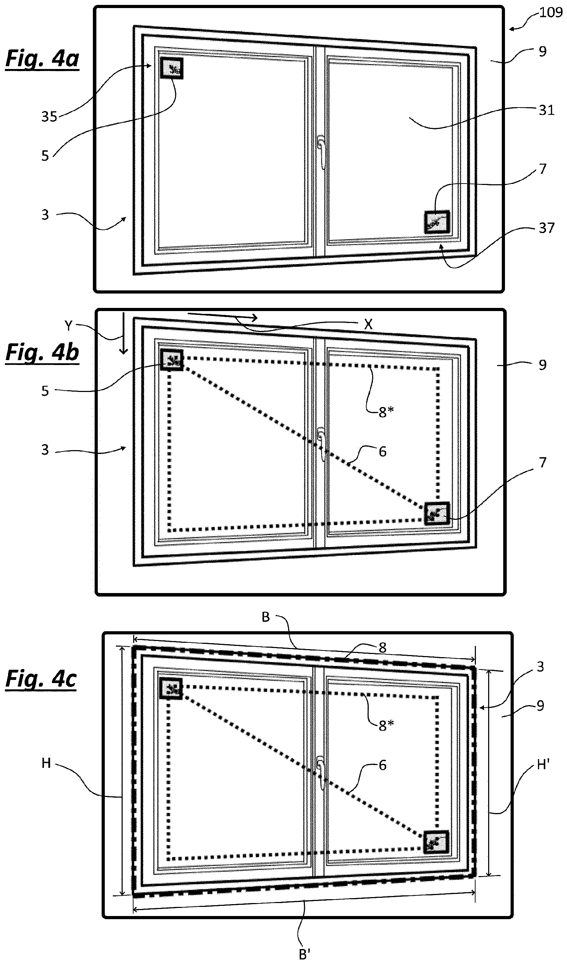

Figur 4a zeigt ein digitales Bild 9 eines Bauelements 3 (hier: Fenster 31) mit zwei daran angebrachten Referenzmarkern 5 und 7 an in der Diagonalrichtung gegenüberliegenden Ecken 35 und 37. Die die Bildverarbeitungsvorrichtung 103 erkennt in dem digitalen Bild 9 die Referenzmarker 5 und 7. Das Bild 9 kann mithilfe der grafischen Benutzerschnittstelle 109 des insbesondere mobilen Endgeräts 100 für einen Benutzer dargestellt werden, wie in Figur 1 dargestellt. Auf der grafischen Benutzeroberfläche 109 kann die Bildverarbeitungselektronik 103 eine zu der Abbildung des Bauelementes 3 korrelierende Referenzgeometrie 8* überlagern. Die Form der Referenzgeometrie 8* korreliert zu der Form des Bauelementes 3.

Korrespondierend zu dem rechteckigen Fenster 31 mit Referenzmarkern kann 5 und 7 in diametral gegenüberliegenden Ecken 37 und 37 kann eine rechteckige Referenzgeometrie 8* in der grafischen Benutzeroberfläche 109 dargestellt werden. Die Bildverarbeitungsvorrichtung 103 kann insbesondere die Diagonale 6 zwischen den unterschiedlichen Referenzmarkern 5 und 7 bestimmen und/oder darstellen.

Anhand bekannter Bildverarbeitungsroutine oder mithilfe von Benutzereingabe kann die Form 8 des Bauelementes 3, gegebenenfalls mithilfe der Referenzgeometrie 8* sowie optional einer Benutzereingabe erfasst werden. Beispielsweise kann der Nutzer das insbesondere mobilen Endgerät 100 bewegen, um eine Benutzereingabe zu erzeugen, welche in dem digitalen Bild geine Korrelation zwischen dem Bauelemente 3 und der Referenzgeometrie 8* herstellt.

Die Bildverarbeitungsvorrichtung 103 kann anschließend mithilfe der Referenzgeometrie 8* entsprechend der Form 8 des Bauelementes 3 sowie wenigstens eines der in dem digitalen Bild 9 abgebildeten Referenzmarker 5 und/oder 7 mit bekannten Verarbeitungsverfahren eine Korrelation zwischen der Referenzmarker 5 und/oder 7, insbesondere einer Skala 51, 52, 71 und/oder 72 eines Referenzmarkers 5 und/oder 7, die Abmessungen des Bauelementes ermitteln. Insbesondere können eine Breite B und eine Höhe H des Bauelementes 3 vorzugsweise als Aufmaß erfasst werden.

Figur 4c stellt hervorgehoben die Form 8 des Bauelements dar. Die Bilderfassungsvorrichtung 3 kann dazu ausgelegt sein, die Abmessungen des Bauelements 3 zu bestimmen, indem ausgehend von dem ersten Referenzmarker 5 eine erste Abmessung in Form einer ersten Höhe H und/oder eine zweite Abmessung in Form einer Breite B bestimmt werden. Ferner kann anhand des zweiten Referenzmarkers 7 eine zweite Breite B' und eine zweite Höhe H' des Bauelementes 3bestimmt werden. Anschließend kann die Abmessung des Bauelements 3 auf Basis eines arithmetischen Mittelwerts der ersten Abmessungen ausgehend vom ersten Referenzmarker 5 und der zweiten Abmessungen ausgehend vom zweiten Referenzmarker 7 bestimmt werden.

Figur 5 zeigt exemplarisch ein Ablaufdiagramm des Verfahrens. In Schritt 501 wird zunächst ein erster Referenzmarker 5 an dem Bauelement 3 vorgesehen. Als nächstes kann in Schritt 502 ein zweiter Referenzmarker 7 an dem Bauelement 3 vorgesehen werden. Als nächstes wird in Schritt 503 ein digitales Bild 9 des Bauelementes 3 mit den darin vorgesehenen ersten und zweiten Referenzmarkern 5 und 7 erzeugt. Als nächstes wird die Form des Bauelements 3 in dem digitalen Bild 9 in Schritt 504 erfasst. Die Erfassung der Form 8 des Bauelementes 3 digitalen Bild 9 kann mit einem Zwischenschritt 505 beinhalten, in dem eine Benutzereingabe erfasst wird, beispielsweise wie oben bezüglich der Figuren 3a-3c oder 4a-4c beschrieben.

Nachdem in dem digitalen Bild 9 die Form 8 des Bauelementes 3, insbesondere des Fensters 31, 31', 31" oder der Tür 32 erfasst wurde, können die Abmessungen des Bauelementes 3 in Schritt 506 bestimmt werden. Schritt 605 umfasst das durchführen insbesondere bekannter Bildverbindungsroutinen, beispielsweise gemäß openCV.

In Schritt 605 kann beispielsweise ausgehend von einer Skala 51, 52, 71 und/oder 72 vorbestimmter Größe wenigstens eine Abmessungen B und/oder H des Bauelementes 3 in dem digitalen Bild 9 bestimmt werden. Zu diesem Zweck kann beispielsweise eine Korrelation zwischen Anzahl von Pixeln des digitalen Bildes 9 zu einer vorbestimmten Größe einer Skala 51, 52, 71 oder 72 durchgeführt werden sowie gegebenenfalls weitere Korrelation zwischen einer Anzahl von Pixeln in dem die Bild 9 zwecks einer weiteren Skala. Ferner kann die Kommunikation von Anzahl von Klicks zu einer Form 8 des Bauelementes 3 in dem digitalen Bild 9 durchgeführt werden. Unter Berücksichtigung der Skala 51, 52, 71 und/oder 72 und deren Größe kann die Größe des Bauelementes 3 entsprechend der Anzahl der Pixel der Form 8 errechnet werden. Die Ermittlung der Abmessungen des Bauelementes 3 kann beispielsweise einen oder mehrere Parameter (Putzstärke, Luftspalt, Altbau oder Neubau) berücksichtigen.

Basierend auf der Größe des Bauelementes 3 sowie gegebenenfalls weiterer bauelementespezifischer Kennwerte, welche von einem Benutzer in einer Benutzerschnittstelle werden, oder die von dem Endgerät 100 aus einer lokalen oder entfernten Datenbank 105 erhalten werden, kann ein Montageaufwand kalkuliert werden. Die Schritt 507 der Kalkulation von Montageaufwand kann gegebenenfalls mehrfach durchgeführt werden, beispielsweise um den Montageaufwand unterschiedlicher Bauelemente verschiedener Typen (Fenstersystem, Türsystem, oder Schiebesystem, etc.), verschiedene Bauarten (unterschiedliche Verglasungsarten, Rahmenarten, unterschiedliche Isoliereigenschaften, unterschiedliche Bauweise, beispielsweise Holz-, Kunststoff-, Recyclingkunststoff-, Metall- oder Komposit-Bauweise) und/oder verschiedene Bauelementeausgestaltungen (beispielsweise Farbgestaltung, Art der Beschläge, dekorative Elemente, Türblatt-Gestaltungsoptionen oder dergleichen) in einen Vergleich zueinander zu setzen.

Das Dimensionierungsverfahren kann beispielsweise zumindest teilweise nacheinander ablaufend die folgenden Schritte eines computer-implementierten Verfahrens umfassen. Bei dem Dimensionierungsverfahren kann in einem ersten Schritt eine Initialisierungsroutine durchgeführt werden, bei der beispielsweise aus einem computerlesbaren Datenspeicher Konfigurationsdaten abgerufen werden, wie etwa Libraries, die bei der Durchführung des computer-implementierten Dimensionierungsverfahrens verwendet werden sollen.

Bei dem Dimensionierungsverfahren kann in einem zweiten Schritt ein Kamerabild von einem Bauelement mit wenigstens einem Referenzmarker erfasst werden. In einem dritten Schritt kann das zuvor erfasste Kamerabild mittels einer grafischen Benutzeroberfläche der Benutzerschnittstelle dargestellt werden, wobei das Kamerabild des Bauelements mit einem vordefinierten Oberflächenelement überlagert werden kann. Das vordefinierte Oberflächenelement kann einer Referenzgeometrie entsprechen.
In einem vierten Schritt des Dimensionierungsverfahrens kann durch eine erste Benutzereingabe der Benutzerschnittstelle bestimmt werden, welcher Art eine Referenzgeometrie sein soll. Die erste Benutzereingabe kann beispielsweise mit einem sog. "Drag and Drop" Handling erfolgen, oder durch ein aktivieren eines insbesondere mittels der grafischen Benutzeroberfläche dargestellten Schalters (sog. Button). Beispielsweise kann die Referenzgeometrie, ein Viereck, insbesondere einem Rechteck, ein Dreieck, ein Kreisbogen, oder dergleichen, sein.

In einem fünften Schritt kann ein Benutzer mittels einer zweiten Benutzereingabe der Benutzerschnittstelle die Referenzgeometrie relativ zu dem Kamerabild des Bauelements in der jeweiligen Größendarstellung geändert werden. Beispielsweise kann in dem fünfen Schritt die zweiten Benutzereingabe als eine sog. "zoom" Funktion durchgeführt werden, etwa durch eine Verfahrbewegung eines mittels der grafischen Benutzeroberfläche dargestellten Schiebereglers, durch eine zwei-Finger-Betätigung eines Touch-Displays (sog. "Zoom-Geste") oder dergleichen. Es sei klar, dass der vierte und/oder fünfte Schritt zu der gleichen Zeit wie der dritte Schritt durchgeführt werden können.

In einem sechsten Schritt kann ein Benutzer mittels einer dritten Benutzereingabe eine Berechnung eines Aufmaßes auf Basis des Kamerabildes (der. Digitalen Bilddatei) veranlassen. Zu diesem Zweck kann die dritte Benutzereingabe beispielsweise eine Betätigung einer Bestätigung umfassen. Die dritte Benutzereingabe kann beispielsweise durch ein aktivieren eines insbesondere mittels der grafischen Benutzeroberfläche dargestellten Schalters (sog. Button) durchgeführt werden. Der sechste Schritt kann umfassen, dass ein Aufmaß umfassend wenigstens eine Höhe und/oder eine Breite eines Bauelements wie oben beschrieben berechnet wird. Der sechste Schritt kann umfassen, dass das berechnete Aufmaß in der grafischen Benutzeroberfläche dargestellt wird. Der sechste Schritt kann umfassen, dass das berechnete Aufmaß mittels einer Kommunikationsschnittstelle an ein anderes Computerprogramm, ein anderes Modul desselben Computerprogramms, welches das Dimensionierungsverfahren durchführt, übermittelt wird. Alternativ oder zusätzlich kann der sechste Schritt umfassen, dass das berechnete Aufmaß mittels einer Kommunikationsschnittstelle an einen anderen Datenspeicher oder eine andere Recheneinheit übermittelt wird.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

Bezugszeichen:
- 1: Messsystem
- 3: Bauelement
- 5,7: Referenzmarker
- 8: Form
- 8*: Referenzgeometrie
- 9: digitales Bild
- 31, 31', 31": Fenster
- 32: Tür
- 35, 35', 35", 37, 37', 37": charakteristische Stelle
- 51, 52, 71, 72: Skala
- 53,73: Markierung
- 100: mobiles Endgerät
- 101: Bilderzeugungsvorrichtung
- 103: Bildverarbeitungsvorrichtung
- 105: Datenbank
- 107: Schwerkraftsensor
- 109: grafische Benutzerschnittstelle

- B, B': Breite
- H, H': Höhe
- X: erste Richtung
- Y: zweite Richtung

## Patentansprüche

1. Verfahren zum Auslegen, insbesondere zum Dimensionieren, eines Bauelements (3), wie einem Fensters (31, 31', 31") und/oder einer Tür (32), in einem Bauwerk, wobei das Bauelement mit wenigstens zwei Referenzmarkern (5, 7) versehen wird, ein digitales Bild (9) des Bauelements mit den wenigstens zwei Referenzmarkern (5, 7) erzeugt wird; und auf Basis des digitalen Bildes (9) die Abmessungen, insbesondere ein Aufmaß umfassend Höhe (H, H') und/oder Breite (B, B'), des Bauelements (3) bestimmt werden.

2. Verfahren nach Anspruch 1, wobei das Bauelement (3) an wenigstens zwei, charakteristischen Stellen (35, 37) mit Referenzmarkern (5, 7) versehen werden.

3. Verfahren nach Anspruch 1 oder 2, wobei die wenigstens zwei Referenzmarker (5, 7) reversibel an dem Bauelement (3) befestigt, insbesondere angeklebt, werden.

4. Verfahren nach einem der vorstehenden Ansprüche, wobei eine zu dem digitalen Bild (9) des Bauelements (3) korrespondierende Form (8) des Bauelements erfasst wird und die Abmessungen auf Basis der erfassten Form (8) bestimmt werden.

5. Verfahren nach Anspruch 4, wobei die Form (8) des Bauelements (3) unter Verwendung einer grafischen Benutzerschnittstelle, wie einem Touch-Display eines mobilen Endgeräts (100), wie ein Tablet-PC oder ein Smartphone, erfasst wird, wobei die grafische Benutzerschnittstelle (109) das digitale Bild (9) darstellt und eine auf die Form (8) des Bauelements bezogene Benutzereingabe registriert, wobei insbesondere die grafische Benutzerschnittstelle (109) ferner eine zu der Form (8) des Bauelements (9) korrespondierende Referenzgeometrie (8*), wie ein Viereck, insbesondere ein Rechteck, darstellt.

6. Verfahren nach einem der vorstehenden Ansprüche, wobei ferner eine zu dem digitalen Bild (9) des Bauelements korrespondierende Perspektivinformation erfasst wird und die Abmessungen auf Basis der Perspektivinformation bestimmt werden.

7. Verfahren nach einem der vorstehenden Ansprüche, wobei wenigstens ein weiteres auf dem digitalen Bild (9) abgebildetes Bauelement, wie wenigstens ein Fenster oder wenigstens eine Tür, erkannt wird, und auf Basis des digitalen Bildes (9) die Abmessungen, insbesondere ein Aufmaß umfassend Höhe und/oder Breite, des wenigstens einen weiteren Bauelements bestimmt werden.

8. Verfahren nach einem der vorstehenden Ansprüche, wobei ferner auf Basis der bestimmten Abmessungen des Bauelements und bauelementespezifischer Kennwerte ein Montageaufwand kalkuliert wird.

9. Messsystem (1) umfassend eine Bilderzeugungsvorrichtung (101) zum Erzeugen eines digitalen Bildes (9) von einem Bauelement (3), insbesondere einem Fenster (31, 31', 31") und/oder einer Tür (32), in einem Bauwerk, wenigstens zwei insbesondere verschiedene an unterschiedlichen Stellen des Bauelements (3) anbringbare Referenzmarker (5, 7) und eine Bildverarbeitungsvorrichtung (103) zum Bestimmen von Abmessungen (B, B', H, H') des Bauelements (3) auf Basis eines durch die Bilderzeugungsvorrichtung (101) von dem Bauelement (3) und wenigstens einem Referenzmarker (5, 7) erzeugten digitalen Bildes (9).

10. Messsystem nach Anspruch 9, umfassend genau oder wenigstens zwei Referenzmarker (5, 7) wenigstens einer Skala (51, 52, 71, 72) in einer ersten Richtung (X) und/oder einer zweiten Richtung (Y), wobei die Bildverarbeitungsvorrichtung (103) eingerichtet ist zum Bestimmen von Abmessungen (B, B', H, H') des Bauelements (3) auf Basis eines durch die Bilderzeugungsvorrichtung (101) von dem Bauelement (3) und den genau oder wenigstens zwei Referenzmarkern (5, 7) insbesondere an charakteristischen Stellen (35, 35', 35", 37, 37', 37") erzeugten digitalen Bildes (9).

11. Messsystem nach Anspruch 9 oder 10, umfassend ein Formerfassungsmittel, wie eine grafische Benutzerschnittstelle (109), insbesondere ein Touch-Display, das dazu eingerichtet ist, unter Berücksichtigung des digitalen Bildes (9) eine Form (8) des Bauelements (3) zu erfassen, wobei die Bildverarbeitungsvorrichtung dazu eingerichtet ist, die Bestimmung der Abmessungen (B, B', H', H') des Bauelements auf Basis der erfassten Form durchzuführen.

12. Messsystem nach einem der Ansprüche 9 bis 11, wobei ein mobiles Endgerät (100), wie ein Smartphone oder ein Tablet-PC, die Bilderzeugungsvorrichtung (101) sowie gegebenenfalls die Bildverarbeitungsvorrichtung (103) und/oder das Formerfassungsmittel, insbesondere die grafische Benutzerschnittstelle (109), umfasst.

13. Messystem nach Anspruch 12, wobei das mobile Endgerät wenigstens einen Sensor, wie einen Lagesensor, aufweist und dazu ausgelegt und eingerichtet ist, eine zu dem digitalen Bild korrespondierende Perspektivinformation, beispielsweise eine Neigung des mobilen Endgeräts, zu erfassen, wobei die Bildverarbeitungsvorrichtung dazu eingerichtet ist, die Bestimmung der Abmessungen (B, B', H', H') des Bauelements auf Basis der erfassten Perspektivinformation durchzuführen.

14. Messsystem nach einem der Ansprüche 9 bis 13, wobei die Bildverarbeitungsvorrichtung (103) ferner zum Bestimmen von Abmessungen (B, B', H, H') wenigstens eines weiteren in dem digitalen Bild (9) dargestellten Bauelements auf Basis eines einzelnen durch die Bilderzeugungsvorrichtung von dem Bauelement, dem wenigstens einem Referenzmarker und dem wenigstens einen weiteren Bauelementes erzeugten digitalen Bildes ausgelegt und eingerichtet ist.
